# EUROPÄISCHE PATENTSCHRIFT

(11) **EP 2 447 101 B1**
(45) Veröffentlichungstag und Bekanntmachung des Hinweises auf die Patenterteilung: **29.03.2017**
(21) Anmeldenummer: 11184973.3
(22) Anmeldetag: 13.10.2011
(51) Int. Cl.: B60R 19/34, B60R 19/18, B62D 21/15, B60K 11/04

(54) **Frontmodul für ein Kraftfahrzeug**
Front module for a motor vehicle
Module frontal pour un véhicule automobile

(30) Priorität: 28.10.2010 DE 102010043035
(43) Veröffentlichungstag der Anmeldung: 02.05.2012
(73) Patentinhaber: Ford Global Technologies, LLC, Dearborn, MI 48126 (US)
(72) Erfinder: Hilmann, Jörgen, 51375 Leverkusen (DE); Niessen, Bert, 52396 Heimbach (DE); Linden, Bernd, 53819 Neunkirchen-Seelscheid (DE)
(74) Vertreter: Dörfler, Thomas

(56) Entgegenhaltungen:
- EP-A1- 1 232 931
- EP-A1- 1 323 566
- EP-A1- 1 988 005
- FR-A1- 2 898 095

## Beschreibung

Die Erfindung betrifft ein Frontmodul für ein Kraftfahrzeug mit zwei beidseitig angeordneten Längsträgern, einem vor den beiden Längsträgern sitzenden Stoßfängerträger, der unter Zwischenschaltung je eines Deformationselements mit den vorderseitigen Stirnenden der Längsträger verbunden ist, sowie einem zwischen den Längsträgern beziehungsweise zwischen den Deformationselementen angeordneten Kühlerrahmen, der das Kühlpaket trägt.

Es ist bekannt, die Frontmodule von Kraftfahrzeugen so auszugestalten, dass sie im Falle einer Kollision gezielt Energie absorbieren. Dies gilt sowohl zum Schutz der Insassen bei Auffahrunfällen beziehungsweise frontalen Zusammenstößen als auch zum Schutz von Fußgängern, die mit dem Fahrzeug, insbesondere bei relativ geringen Fahrzeuggeschwindigkeiten, in Berührung kommen.

Es ist ein wichtiges Ziel der Kraftfahrzeugindustrie neben dem Personenschutz auch darauf zu achten, dass funktionelle Bauteile im Frontbereich des Fahrzeugs, wie beispielsweise das Kühlpaket, geschützt werden, um nach Unfällen die Reparaturkosten gering zu halten. Um sich diesem Ziel anzunähern, sind bereits verschiedene Lösungen bekannt geworden.

Nach der EP 1 988 005 ist es beispielsweise bekannt, den Frontaufbau so zu gestalten, dass die Befestigung des Kühlpakets an der Tragstruktur durch einen Rahmen gebildet ist, in dem der Kühler gehalten ist und der seinerseits über Verbindungselemente an der Tragstruktur verankert ist, die bei Überschreitung einer Maximalkraft sich von der Tragstruktur lösen. Wenn die Crashboxen komplett zusammengedrückt sind, kommt der Stoßfängerquerträger unmittelbar an dem Kühlerrahmen zur Anlage, schert die aus Kunststoff bestehenden, als Verankerungsstifte ausgebildeten Verbindungselemente ab und verschiebt die Kühlereinheit in Richtung auf den Fahrgastraum.

Ferner ist es aus der EP 1 957 346 bekannt, dass das Kühlpaket im Frontbereich des Kraftfahrzeugs an einem Abschnitt des Trägerelements befestigt ist, der verschoben werden kann, wenn eine äußere Kraft, die größer als ein vorbestimmter Wert ist, auf diesem Bereich einwirkt. Gleichzeitig bleibt dabei jedoch mindestens ein Befestigungszustand des Bauteils mit dem Trägerelement erhalten, wodurch sichergestellt werden soll, dass das verschobene Bauteil nicht aus dem Motorraum auf die Straße fallen und dadurch beschädigt werden kann.

Ferner ist ein Frontmodul bekannt (FR 2 898 095 A1), bei dem der Stoßfängerträger an Crashboxen sitzt, die am Ende der Längsträger angeordnet sind. Wenn nach einem Frontalaufprall eine der Crashboxen oder beide Crashboxen komplett zusammengedrückt sind, kommt der Stoßfängerträger an Puffern des Kühlerrahmens zur Anlage und verschiebt diesen in Richtung auf den Fahrgastraum.

Bei einer ähnlichen Konstruktion (EP 1 232 931 A1) schlägt der Stoßfängerträger, nachdem die Crashboxen bei einem Frontalzusammenstoß komplett zusammengedrückt sind, an Vorsprüngen des Kühlerrahmens an, wobei sich ein entsprechendes Teil im Bereich einer Sollbruchstelle löst. Dadurch wird der Kühler einschließlich seiner Tragstruktur nach hinten zum Fahrgastraum verschoben.

Schließlich ist bei einer weiteren Konstruktion bekannt (EP 1 323 566 A1), den Montageträger der Kühleinheit an seinem oberen Ende um eine in Fahrzeugquerrichtung liegende Achse schwenkbar aufzuhängen. Der untere Bereich des Montageträgers ist auf beiden Seiten mittels Haltegliedern befestigt. Bei den Haltegliedern handelt es sich um Winkellaschen mit einer vorderen Abwinklung und einer rückwärtigen Abwinklung, wobei letztere an dem Montageträger befestigt ist. Im Falle eines Frontalcrashs wird dann der Montageträger zusammen mit dem Kühlmodul um seine obere Achse nach hinten in Richtung auf den Fahrgastraum verschwenkt.

Diese bekannten Beispiele reichen jedoch bei Weitem nicht aus, um einen ausreichenden Insassen- und Fußgängerschutz zu erzielen und gleichzeitig das Kühlpaket ausreichend zu schützen.

Der Erfindung liegt daher die Aufgabe zugrunde, ein Frontmodul eines Kraftfahrzeugs derart auszugestalten, dass nicht nur der Insassen- und Fußgängerschutz verbessert, sondern auch das Kühlerpaket im Falle einer Kollision optimal geschützt wird.

Erfindungsgemäß wird diese Aufgabe mit den Merkmalen des Anspruchs 1 gelöst, nämlich dadurch,
- dass der Kühlerrahmen (4) zur Frontseite des Fahrzeugs hin konvex gewölbt ausgebildet ist,
- dass die bauchige Wölbung eindrückbar ist und dadurch ein zusätzliches Element zur Absorption der Aufprallenergie bietet,
- dass im Kollisionsfall der Stoßfängerträger (1) zunächst in einer ersten Deformationsstufe nach der Verformung des Deformationselementes (2) bzw. der Deformationselemente an dem Kühlerrahmen (4) zur Anlage kommt,
- dass dieser anschließend in einer zweiten Deformationsstufe verformt wird und
- dass der Stoßfängerträger 1 nach der Deformation des Kühlerrahmens (4) an mindestens einer Stelle des Kühlpakets (5) zur Anlage kommt, um dieses nach hinten in Richtung auf den Fahrgastraum zu verschieben.

Aufgrund dieses zweistufigen Verformungsmechanismus des Frontmoduls wird ein extrem großer Deformationsbereich geschaffen, der die Aufprallenergie optimal absorbiert und sowohl Insassen als auch Fußgänger schützt, während gleichzeitig das Kühlerpaket unbeschädigt bleibt.

Für die erste Deformationsstufe ist der Verschiebungsweg des Kühlerrahmens zweckmäßig durch sein Anschlagen an dem unteren Rahmenteil begrenzt.

Zusätzlich kann der Kühlerrahmen in sich deformierbar ausgebildet sein, sodass dadurch zusätzlicher Deformationsspielraum geschaffen wird.

Ferner kann der Stoßfängerträger bei seiner Bewegung nach hinten zu Beginn der zweiten Deformationsstufe an dem Verteilerkasten des Kühlpakets zur Anlage kommen.

Dabei kann zu beiden Seiten des Kühlpakets an dem Verteilerkasten in Höhe des Stoßfängerträgers ein Kontaktblock angeordnet sein, an dem der Stoßfängerträger zu Beginn der zweiten Deformationsstufe seiner Verschiebung zur Anlage kommt.

Vorzugsweise besteht der Kontaktblock aus elastischem Material, sodass der Deformationsmechanismus sanft und kontinuierlich, also nicht ruckartig, erfolgen kann.

Die Erfindung ist in der Zeichnung beispielhaft dargestellt und im Nachstehenden im Einzelnen anhand der Zeichnung beschrieben. Es zeigen:
- Fig. 1: in schematischer Darstellung die Seitenansicht des Frontmoduls, wobei fünf Deformationsschritte a bis e dargestellt sind, und
- Fig. 2: einen Schnitt entlang der Linie II-II aus Fig. 1 wobei drei Deformationsschritte a bis c veranschaulicht sind.

Nach der Zeichnung besteht das erfindungsgemäße Frontmodul aus einem Stoßfängerträger 1, der auf beiden Seiten über je ein Deformationselement 2 mit den vorderseitigen Stirnenden der Längsträger 3 verbunden ist, sowie einem zwischen den Längsträgern 3 beziehungsweise zwischen den Deformationselementen 2 angeordneten Kühlerrahmen 4, der das Kühlpaket 5 trägt. Der Kühlerrahmen 4 ist zur Frontseite des Fahrzeugs hin gewölbt ausgebildet und bietet dadurch, dass die bauchige Wölbung eingedrückt werden kann, ein zusätzliches Element zur Absorption der Aufprallenergie. Das Kühlpaket 5 weist zumindest in seinen Seitenbereichen je einen Verteilerkasten 6 auf, an dem in Höhe des Stoßfängerträgers 1 je ein Kontaktblock 7 angeordnet ist, an dem der Stoßfängerträger 1 im Kollisionsfall zur Anlage kommen kann. Der Kontaktblock 7 besteht aus elastischem Material, sodass die einen Verteilerkasten 6 auf, an dem in Höhe des Stoßfängerträgers 1 je ein Kontaktblock 7 angeordnet ist, an dem der Stoßfängerträger 1 im Kollisionsfall zur Anlage kommen kann. Der Kontaktblock 7 besteht aus elastischem Material, sodass die Berührphase zwischen Stoßfängerträger 1 und Verteilerkasten 6 beziehungsweise Kühlpaket 5 abgefedert wird. Im unteren Bereich des Frontmoduls ist ein als Querträger ausgebildetes unteres Rahmenteil 8 angeordnet.

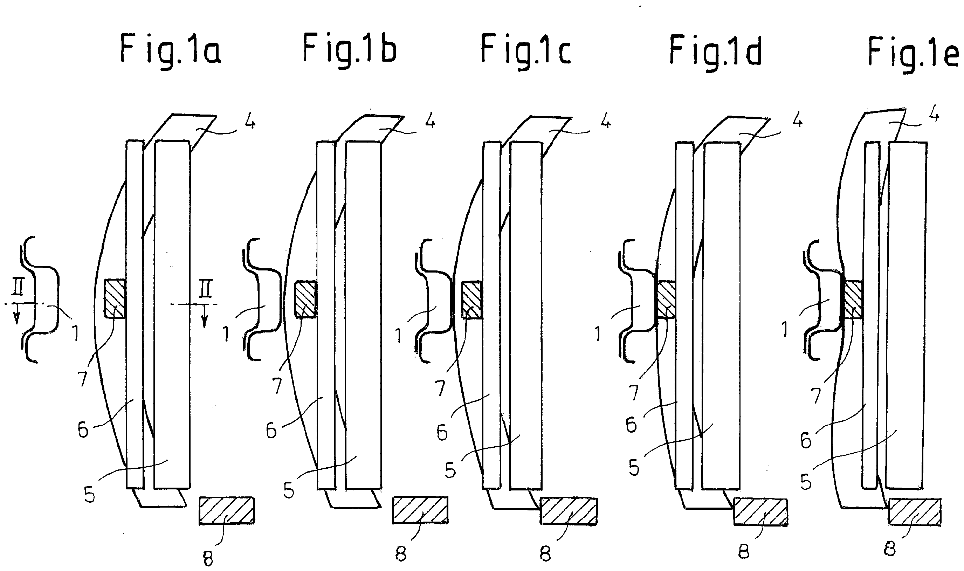

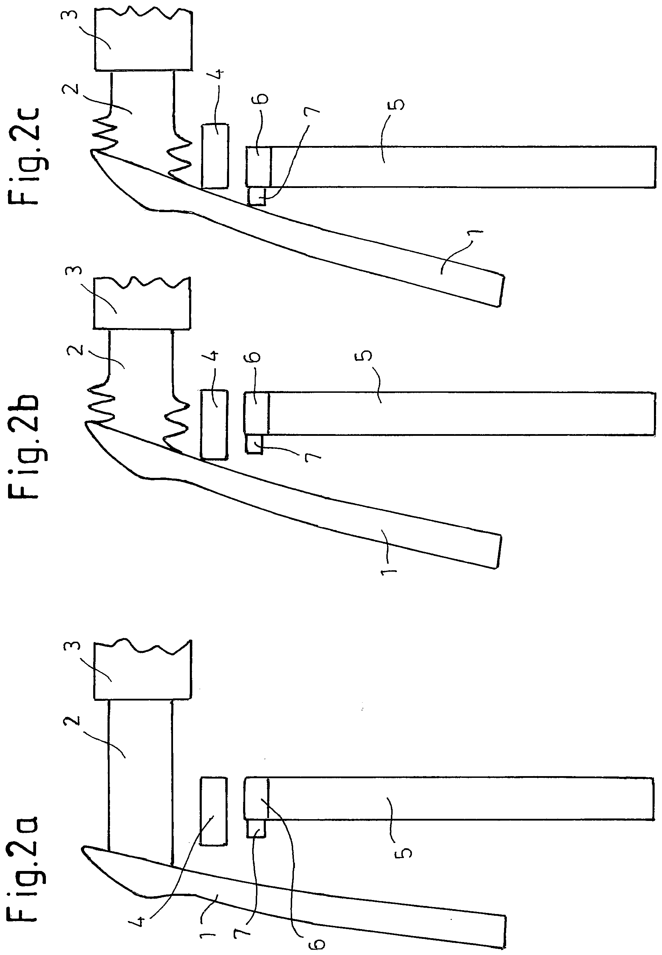

In Fig. 1 und 2 stellt jeweils die Teilfigur a die Grundkonzeption des Frontmoduls dar, in der noch keine Verformung des Frontmoduls erfolgt ist und der Stoßfängerträger 1 sich in seiner Normalstellung befindet.

Im Kollisionsfall bewegt sich der Stoßfängerträger 1 nach hinten in Richtung auf den in der Zeichnung nicht dargestellten Fahrgastraum, bis er an dem Kühlerrahmen 4 zur Anlage kommt, wie in Fig. 1 in der Teilfigur b dargestellt.

Wenn sich der Stoßfängerträger 1 weiter nach hinten bewegt, nimmt er den Kühlerrahmen 4 mit, bis dieser gemäß Fig. 1c an dem unteren Rahmenteil 8 zur Anlage kommt. Diese Konstellation ist in Fig. 2b in der Draufsicht dargestellt, wobei zur erkennen ist, dass sich in dieser Stellung das zwischen dem Längsträger 3 und dem Stoßfängerträger 1 angeordnete Deformationselement 2 bereits stark verformt hat.

Bei der weiteren Verschiebung des Stoßfängerträgers 1 nach hinten, legt sich der Stoßfängerträger 1 unter Verformung des Kühlerrahmens 4, wie in Fig. 1d veranschaulicht, allmählich an den elastischem Kontaktblock 7 an , der an dem Verteilerkasten 6 des Kühlpakets 5 angeordnet ist, und verschiebt das Kühlpaket 5 in seiner Gesamtheit nach hinten, ohne dieses zu beschädigen. Dieser Endzustand ist in der Seitenansicht in Figur 1e veranschaulicht.

In der Draufsicht ist dieser Zustand in Fig. 2c zu erkennen, bei dem der Stoßfängerträger 1 das Deformationselement 2 noch weiter zusammengedrückt und den Kühlerrahmen 4 soweit nach hinten verschoben und deformiert hat, dass er an dem Kontaktblock 7 zur Anlage kommt und diesen in eine nach hinten verschobene Position gedrückt hat, in der das Kühlpaket 5 noch nicht beschädigt ist.

Wie aus der Zeichnung zu erkennen ist, erfolgt im Kollisionsfall eine zweistufige Verformung.

In der ersten Stufe legt sich der Stoßfängerträger 1 nach der Verformung der Deformationselemente 2 an den Kühlerrahmen 4 an, bis er mit den an dem Verteilerkasten 6 vorgesehenen Kontaktblock 7 in Berührung kommt. Bis zu dieser Konstellation befindet sich das Kühlpaket 5 noch in seiner ursprünglichen Stellung.

In der nun folgenden zweiten Deformationsstufe werden die Deformationselemente noch weiter zusammengedrückt, der Kühlerrahmen 4 wird weiter verformt und der Stoßfängerträger 1 bewegt sich weiter nach hinten in Richtung auf den Fahrgastraum, wobei er das Kühlpaket 5 nach hinten mitnimmt, ohne dieses zunächst wesentlich zu beschädigen.

Das erfindungsgemäße Frontmodul wird also den gestellten Anforderungen in zweierlei Hinsicht gerecht. Einerseits bietet es einen guten Schutz sowohl für die Insassen als auch für einen Fußgänger, sofern der Stoß ein bestimmtes Ausmaß nicht überschreitet. Andererseits wird das Kühlpaket 5 sehr wirkungsvoll geschützt, da sich die erste Stufe der Verformung vor dem Kühlpaket 5 abspielt, während in der zweiten Stufe das gesamte Kühlpaket 5, ohne das dieses zunächst beschädigt wird, durch Anlage des Stoßfängerträgers 1 an den Kontaktblöcken 7 ein Stück nach hinten in Richtung auf den Fahrgastraum verschoben wird.

### BEZUGSZEICHENLISTE

- 1: Stoßfängerträger
- 2: Deformationselement
- 3: Längsträger
- 4: Kühlerrahmen
- 5: Kühlpaket
- 6: Verteilerkasten
- 7: Kontaktblock
- 8: unteres Rahmenteil

## Patentansprüche

1. Frontmodul für ein Kraftfahrzeug mit zwei beidseitig angeordneten Längsträgern (3), einem vor den beiden Längsträgern (3) sitzenden Stoßfängerträger (1), der unter Zwischenschaltung je eines Deformationselementes (2) mit den vorderseitigen Stirnenden der Längsträger (3) verbunden ist, sowie einem zwischen den Längsträgern (3) beziehungsweise zwischen den Deformationselementen (2) angeordneten Kühlerrahmen (4), der das Kühlpaket (5) trägt,
**dadurch gekennzeichnet,**
- **dass** der Kühlerrahmen (4) zur Frontseite des Fahrzeugs hin konvex gewölbt ausgebildet ist,
- **dass** die bauchige Wölbung eindrückbar ist und dadurch ein zusätzliches Element zur Absorption der Aufprallenergie bietet,
- **dass** im Kollisionsfall der Stoßfängerträger (1) zunächst in einer ersten Deformationsstufe nach der Verformung des Deformationselementes (2) bzw. der Deformationselemente an dem Kühlerrahmen (4) zur Anlage kommt,
- **dass** dieser anschließend in einer zweiten Deformationsstufe verformt wird und
- **dass** der Stoßfängerträger 1 nach der Deformation des Kühlerrahmens (4) an mindestens einer Stelle des Kühlpakets (5) zur Anlage kommt, um dieses nach hinten in Richtung auf den Fahrgastraum zu verschieben.

2. Frontmodul nach Anspruch 1,
**dadurch gekennzeichnet,**
**dass** für die erste Deformationsstufe der Verschiebungsweg des Kühlerrahmens (4) durch sein Anschlagen an dem unteren Rahmenteil (8) begrenzt ist.

3. Frontmodul nach Anspruch 1 bis 2,
**dadurch gekennzeichnet,**
**dass** der Kühlerrahmen (4) in sich deformierbar ist.

4. Frontmodul nach einem der Ansprüche 1 bis 3,
**dadurch gekennzeichnet,**
**dass** der Stoßfängerträger (1) bei seiner Bewegung nach hinten zu Beginn der zweiten Deformationsstufe an dem Verteilerkasten (6) des Kühlpakets (5) zur Anlage kommt.

5. Frontmodul nach Anspruch 4,
**dadurch gekennzeichnet,**
**dass** zu beiden Seiten des Kühlpakets (5) an dem Verteilerkasten (6) in Höhe des Stoßfängerträgers (1) je ein Kontaktblock (7) angeordnet ist, an dem der Stoßfängerträger (1) zu Beginn der zweiten Deformationsstufe bei seiner Verschiebung nach hinten zur Anlage kommt.

6. Frontmodul nach Anspruch 5,
**dadurch gekennzeichnet,**
**dass** der Kontaktblock (7) aus elastischem Material besteht.

## Claims

1. Front module for a motor vehicle with two longitudinal members (3) arranged one on either side, a bumper support (1) which sits in front of the two longitudinal members (3) and is connected to the front ends of the longitudinal members (3) with the interconnection of a respective deformation element (2), and a radiator frame (4) which is arranged between the longitudinal members (3) and between the deformation members (2) and supports the cooling assembly (5),
**characterized**
- **in that** the radiator frame (4) is designed so as to arch convexly toward the front side of the vehicle,
- **in that** the bulging arch can be pressed in and thus provides an additional element for absorbing the impact energy,
- **in that**, in the event of a collision, the bumper support (1) first of all, in a first deformation stage after the deformation of the deformation element (2) or of the deformation elements, comes to bear against the radiator frame (4),
- **in that** said radiator frame (4) is then deformed in a second deformation stage, and
- **in that**, after the deformation of the radiator frame (4), the bumper support (1) comes to bear against at least one point of the cooling assembly (5) in order to displace the latter to the rear in the direction of the passenger compartment.

2. Front module according to Claim 1, **characterized in that**, for the first deformation stage, the displacement distance of the radiator frame (4) is limited by the latter striking against the lower frame part (8).

3. Front module according to Claims 1 and 2, **characterized in that** the radiator frame (4) can be deformed per se.

4. Front module according to one of Claims 1 to 3, **characterized in that** the bumper support (1), upon movement thereof to the rear at the beginning of the second deformation stage, comes to bear against the distributor box (6) of the cooling assembly (5).

5. Front module according to Claim 4, **characterized in that**, on both sides of the cooling assembly (5), a respective contact block (7) is arranged on the distributor box (6) level with the bumper support (1), against which contact block the bumper support (1) comes to bear at the beginning of the second deformation stage upon displacement of said bumper support to the rear.

6. Front module according to Claim 5, **characterized in that** the contact block (7) is composed of elastic material.

## Revendications

1. Module frontal pour un véhicule automobile, comprenant deux longerons (3) disposés de chaque côté, un support de pare-chocs (1) reposant devant les deux longerons (3), qui est raccordé aux extrémités frontales avant des longerons (3) par interposition d'un élément de déformation respectif (2), et un cadre de radiateur (4) disposé entre les longerons (3) ou entre les éléments de déformation (2), qui porte le bloc de refroidissement (5),
**caractérisé en ce que**
- le cadre de radiateur (4) est réalisé avec une courbure convexe vers le côté frontal du véhicule,
- la courbure bombée peut être enfoncée et constitue ainsi un élément supplémentaire pour absorber l'énergie de choc,
- en cas de collision, le support de pare-chocs (1) vient d'abord en appui dans un premier stade de déformation après la déformation de l'élément de déformation (2) ou des éléments de déformation contre le cadre de radiateur (4),
- celui-ci se déforme ensuite dans un deuxième stade de déformation et
- le support de pare-chocs (1), après la déformation du cadre de radiateur (4), vient en appui contre au moins un endroit du bloc de refroidissement (5) afin de déplacer celui-ci vers l'arrière dans la direction de l'habitacle.

2. Module frontal selon la revendication 1,
**caractérisé en ce que**
la course de déplacement du cadre de radiateur (4), pour le premier stade de déformation, est limitée par sa venue en butée contre la partie de cadre inférieure (8).

3. Module frontal selon la revendication 1 ou 2,
**caractérisé en ce que**
le cadre de radiateur (4) est déformable en soi.

4. Module frontal selon l'une quelconque des revendications 1 à 3, **caractérisé en ce que** le support de pare-chocs (1), lors de son déplacement vers l'arrière au début du deuxième stade de déformation, vient en appui contre le caisson de distribution (6) du bloc de refroidissement (5).

5. Module frontal selon la revendication 4,
**caractérisé en ce que**
des deux côtés du bloc de refroidissement (5) au niveau du caisson de distribution (6) à la hauteur du support de pare-chocs (1) est à chaque fois disposé un bloc de contact (7) au niveau duquel le support de pare-chocs (1) vient en appui au début du deuxième stade de déformation lors de son déplacement vers l'arrière.

6. Module frontal selon la revendication 5,
**caractérisé en ce que** le bloc de contact (7) se compose de matériau élastique.
